# EUROPEAN PATENT APPLICATION

(11) **EP 4 280 427 A1**
(43) Date of publication of application: **22.11.2023**
(21) Application number: 23167972.1
(22) Date of filing: 14.04.2023
(51) Int. Cl.: H02K 1/20, H02K 1/06, H02K 15/02

(54) **STATOR CORE OF STACKED LAMINATIONS WITH COOLANT FLOW CHANNELS**

(30) Priority: 19.05.2022 US 202217748600
(71) Applicant: Rivian IP Holdings, LLC, Plymouth MI 48170 (US)
(72) Inventor: BALLIETT, Logan Noel, Los Angeles, 90027 (US); SIDDIQ, Zahid Mohamed, Torrance, 90504 (US); KAPATRAL, Shreyas, Torrance, 90501 (US); DANG, Dang Dinh, Garden Grove, 92840 (US)
(74) Representative: Murgitroyd & Company

(57) **Abstract**

A stator assembly includes a plurality of laminations configured to form a stator stack. Each of the plurality of laminations includes a set of projections disposed along an outer perimeter of the lamination, in which each of the set of projections includes a mounting hole passing therethrough. Each of the plurality of laminations further includes a plurality of indentations each extending into a respective one of the set of projections. The plurality of laminations are configured to form the stator stack in accordance with a predetermined indexing, such that the plurality of indentations define one or more coolant flow channels.

## Description

### INTRODUCTION

Numerous loss types are inherent to the design and operation of electrical machine (e.g., electric motors, compressors). Such losses may include, for example, resistive losses within the winding conductors and hysteresis, eddy current losses, excess losses within the electric motor's core, and so forth. Additionally, thermal losses of an electrical machine may have a compounding effect, in that thermal losses may raise resistances and further increase the rate of loss. Furthermore, electrical machines may be composed of materials that are designed to remain below certain operating temperatures to avoid potential damage, such as magnet derating or stator winding enamel electrical strength reduction.

### BRIEF SUMMARY

Embodiments of the present disclosure are directed toward a stator stack of an electric vehicle (EV), which may include a number of stacked laminations (e.g., conductive metal sheets) each including a number of projecting mounting lobes and a number of indentations extending into the number of projecting mounting lobes. For example, the number of projecting mounting lobes may each include a mounting lobe and mounting bolt hole that may be disposed along an outer perimeter of each lamination, and further utilized to mount or bolt the stator stack as part of the electric motor drive unit of the vehicle. Further, the number of indentations may each include, for example, a partial slit or a partial breach that may be cut or lasered into the conductive metal of each lamination in a manner such that the number of indentations (e.g., partial slits or partial breaches in the conductive metal sheet) may extend into each mounting lobe of each lamination.

For example, the number of indentations (e.g., partial slits or partial breaches in the conductive metal sheet) may extend into each mounting lobe in a manner such that, once each lamination is secured together to form the stator stack, the number of indentations (e.g., partial slits) may collectively define one or more coolant flow channels for effectively cooling each lamination of the stator stack. Specifically, the number of stacked laminations (e.g., conductive metal sheets) may be rotated approximately 90° with respect to each other within the stator stack so as to cause the number of indentations (e.g., partial slits or partial breaches in the conductive metal sheet) to define one or more coolant flow channels. For example, by defining the one or more coolant flow channels, an oil-dispersing coolant dispersed to the stator stack may be allowed to pervade each of the mounting lobes of each lamination and flow along the circumference of the stator stack for more effectively cooling the stator stack. The dimensions of the one or more coolant flow channels may be further defined and adjusted based on, for example, a desired oil-dispersing coolant flow rate and/or the thermal constraints of the stator stack.

In a first set of embodiments, a stator assembly may include a plurality of laminations configured to form a stator stack. In certain embodiments, each of the plurality of laminations may include a set of projections disposed along an outer perimeter of the lamination, in which each of the set of projections includes a mounting hole passing therethrough. In certain embodiments, each of the plurality of laminations may include a plurality of indentations each extending into a respective one of the set of projections. In certain embodiments, the plurality of laminations may be configured to form the stator stack in accordance with a predetermined indexing, such that the plurality of indentations define one or more coolant flow channels. For example, in some embodiments, the plurality of laminations may be configured to receive a flow of coolant by way of the one or more coolant flow channels.

In certain embodiments, the predetermined indexing may include a predetermined indexing of approximately 90°. For example, in some embodiments, the plurality of laminations may include a first lamination and a second lamination, in which the first lamination may be rotated by approximately 90° with respect to the second lamination. In one embodiment, the first lamination may be adjacent to the second lamination. In one embodiment, the one or more coolant flow channels may be defined in accordance with a desired coolant flow rate. In another embodiment, the one or more coolant flow channels may be defined in accordance with one or more thermal constraints of the stator stack. In certain embodiments, each of the one or more coolant flow channels is configured to direct a flow of an oil-dispersing coolant to at least one the plurality of laminations.

In certain embodiments, each of the plurality of laminations may be stacked about an axis in an axial direction. In one embodiment, each set of the set of projections may extend radially outward from the axis. In one embodiment, each of the mounting holes may pass through the set of projections in the axial direction. In one embodiment, each of the plurality of indentations are normal to the axial direction. For example, in some embodiments, the plurality of indentations in each of the plurality of laminations may extend in opposite circumferential directions about the axis. In some embodiments, the plurality of indentations may extend at least partially beyond a center of the set of projections. In certain embodiments, the stator stack comprises a full-face, self-bonded stator stack, an interlocked stator stack, a welded stator stack, or a dot-bonded stator stack. In certain embodiments, each of the set of projections disposed along the outer perimeter of the lamination may be configured to receive a bolt into the mounting hole for mounting to a housing.

In a second set of embodiments, a lamination layer of a stator stack may include a metal ring, a set of slots disposed along an inner perimeter of the metal ring, and a set of projections disposed along an outer perimeter of the metal ring. In one embodiment, each of the set of projections may include a mounting hole passing therethrough, in which the set of projections may be configured to extend outwardly in a direction opposite the set of slots. In certain embodiments, the lamination layer of the stator stack may further include a plurality of indentations each extending into a respective one of the set of projections. For example, in some embodiments, the lamination layer may include one of a plurality of lamination layers configured to form the stator stack in accordance with a predetermined indexing, such that the plurality of indentations may define one or more coolant flow channels.

In a third set of embodiments, a method of manufacturing a stator assembly may in forming a plurality of laminations configured to form a stator stack. In certain embodiments, each of the plurality of laminations includes a set of projections disposed along an outer perimeter of the lamination, in which each of the set of projections includes a mounting hole passing therethrough. In certain embodiments, each of the plurality of laminations may further include a plurality of indentations each extending into a respective one of the set of projections. In certain embodiments, the method of manufacturing the stator assembly may further include securing together the plurality of laminations to form the stator stack. In embodiment, the plurality of laminations are secured together in accordance with a predetermined indexing, such that the plurality of indentations define one or more coolant flow channels.

In certain embodiments, forming the plurality of laminations may include forming the plurality of laminations without the plurality of indentations, and subsequent to forming the plurality of laminations without the plurality of indentations, forming the plurality of indentations in the plurality of laminations. In certain embodiments, prior to forming the plurality of indentations in the plurality of laminations, the set of projections may be formed along an outer perimeter of each of the plurality of laminations. In certain embodiments, securing together the plurality of laminations may include bonding together the plurality of laminations to form the stator stack.

The embodiments disclosed above are only examples, and the scope of this disclosure is not limited to them. Certain embodiments may include all, some, or none of the components, elements, features, functions, operations, or steps of the embodiments disclosed above. Embodiments according to the invention are in particular disclosed in the attached claims directed to a method, a storage medium, a system and a computer program product, wherein any feature mentioned in one claim category, e.g., method, can be claimed in another claim category, e.g., system, as well. The dependencies or references back in the attached claims are chosen for formal reasons only. However any subject matter resulting from a deliberate reference back to any previous claims (in particular multiple dependencies) can be claimed as well, so that any combination of claims and the features thereof are disclosed and can be claimed regardless of the dependencies chosen in the attached claims. The subject-matter which can be claimed comprises not only the combinations of features as set out in the attached claims but also any other combination of features in the claims, wherein each feature mentioned in the claims can be combined with any other feature or combination of other features in the claims. Furthermore, any of the embodiments and features described or depicted herein can be claimed in a separate claim and/or in any combination with any embodiment or feature described or depicted herein or with any of the features of the attached claims.

### BRIEF DESCRIPTION OF THE DRAWINGS

FIG. 1 illustrates an example embodiment of a vehicle, which may include stator stack with a number of stacked laminations including projecting mounting lobes and one or more defined coolant flow channels.
FIGs. 2A and 2B illustrate an example diagram of a lamination including a number of projecting mounting lobes and an example diagram of a lamination including the number of projecting mounting lobes and a number of indentations extending into the number of projecting mounting lobes, respectively.
FIGs. 3A-3F illustrate example embodiments of a stator stack with a number of stacked laminations including projecting mounting lobes and a number of indentations for defining one or more coolant flow channels.
FIGs. 4A-4C illustrate example embodiments of alternative configurations of a stator stack with a number of stacked laminations including projecting mounting lobes and a number of indentations for defining one or more coolant flow channels.
FIGs. 5A and 5B illustrate an example plot diagram of the thermal impact to an electric motor drive unit for a stator stack with a number of stacked laminations without a number of indentations for defining one or more coolant flow channels as compared to an example plot diagram of the thermal impact to an electric motor drive unit for a stator stack with a number of stacked laminations including a number of indentations for defining one or more coolant flow channels.
FIG. 5C illustrates example diagram of the stress impact to a stator stack with a number of stacked laminations without a number of indentations for defining one or more coolant flow channels as compared to an example diagram of the stress impact to a stator stack with a number of stacked laminations including a number of indentations for defining one or more coolant flow channels.
FIG. 6 illustrates a flow diagram of a method for manufacturing a stator stack with a number of stacked laminations including projecting mounting lobes and a number of indentations for defining one or more coolant flow channels.
FIG. 7A is a schematic of an example computer system.
FIG. 7B illustrates example firmware for a vehicle ECU.

### DESCRIPTION OF EXAMPLE EMBODIMENTS

Embodiments of the present disclosure are directed toward a stator stack of an electric vehicle (EV), which may include a number of stacked laminations (e.g., conductive metal sheets) each including a number of projecting mounting lobes and a number of indentations extending into one or more of the number of projecting mounting lobes. For example, the number of projecting mounting lobes may each include a mounting lobe and mounting bolt hole that may be disposed along an outer perimeter of each lamination, and further utilized to mount or bolt the stator stack as part of the electric motor drive unit of the vehicle. Further, the number of indentations may each include, for example, a partial slit or a partial breach that may be cut or lasered into the conductive metal of each lamination in a manner such that the number of indentations (e.g., partial slits or partial breaches in the conductive metal sheet) may extend into each of one more mounting lobes of each lamination.

For example, the number of indentations (e.g., partial slits or partial breaches in the conductive metal sheet) may extend into each of one or more mounting lobes in a manner such that, once each lamination is secured together to form the stator stack, the number of indentations (e.g., partial slits) may collectively define one or more coolant flow channels for effectively cooling each lamination of the stator stack. Specifically, the number of stacked laminations (e.g., conductive metal sheets) may be rotated approximately 90° with respect to each other within the stator stack so as to cause the number of indentations (e.g., partial slits or partial breaches in the conductive metal sheet) to define one or more coolant flow channels. For example, by defining the one or more coolant flow channels, an oil-dispersing coolant dispersed to the stator stack may be allowed to pervade each of the one or more mounting lobes of each lamination and flow along the circumference of the stator stack for more effectively cooling the stator stack. The dimensions of the one or more coolant flow channels may be further defined and adjusted based on, for example, a desired oil-dispersing coolant flow rate and/or the thermal constraints of the stator stack.

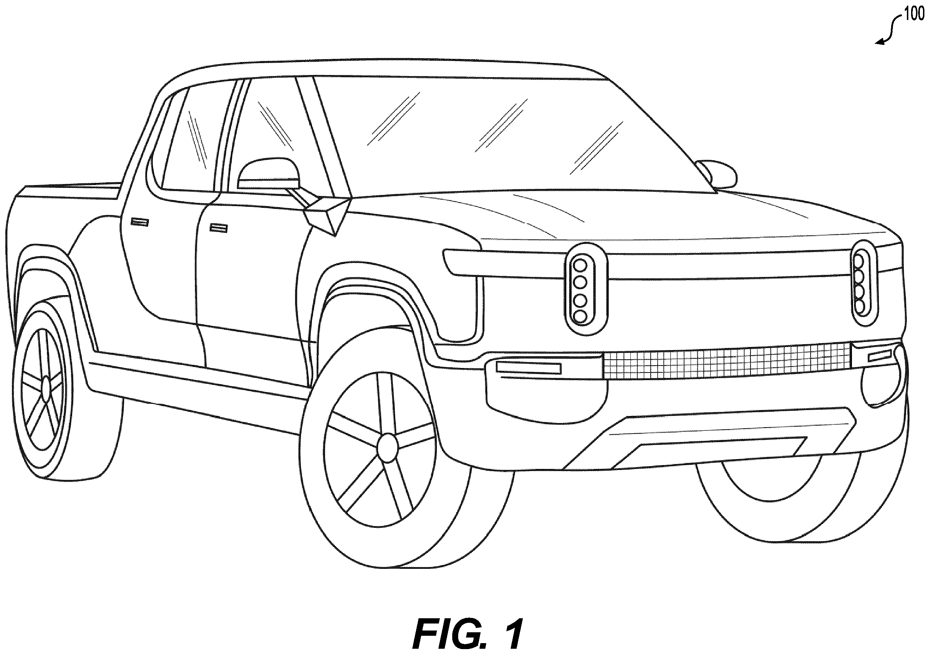

**FIG. 1** illustrates an example embodiment of a vehicle 100, in accordance with the presently disclosed embodiments. While the present embodiments may be discussed herein primarily with respect an electric motor passenger vehicle, it should be appreciated that the present embodiments may applied to any type of vehicle (e.g., aircrafts, watercrafts, railcars, semi-trailer trucks, farming vehicles, rover vehicles, scooters, buses, and so forth) or any of various industrial machines (e.g., electric pumps, compressors, extruders, generators, turbines, and so forth) that may employ one or more electric motors. As depicted, the vehicle 100 may include any passenger vehicle (e.g., a car, a truck, a pickup truck, a sports utility vehicle (SUV), a minivan, a crossover utility vehicle (CUV), a cargo van, a towing truck) that may utilized for transportation and to navigate one or more rural environments, urban environments, and/or off-roading and mountainous environments. In one embodiment, the vehicle 100 may include a gasoline-powered vehicle that may be propelled, for example, by an internal combustion engine (ICE) or other fuel-injection engine.

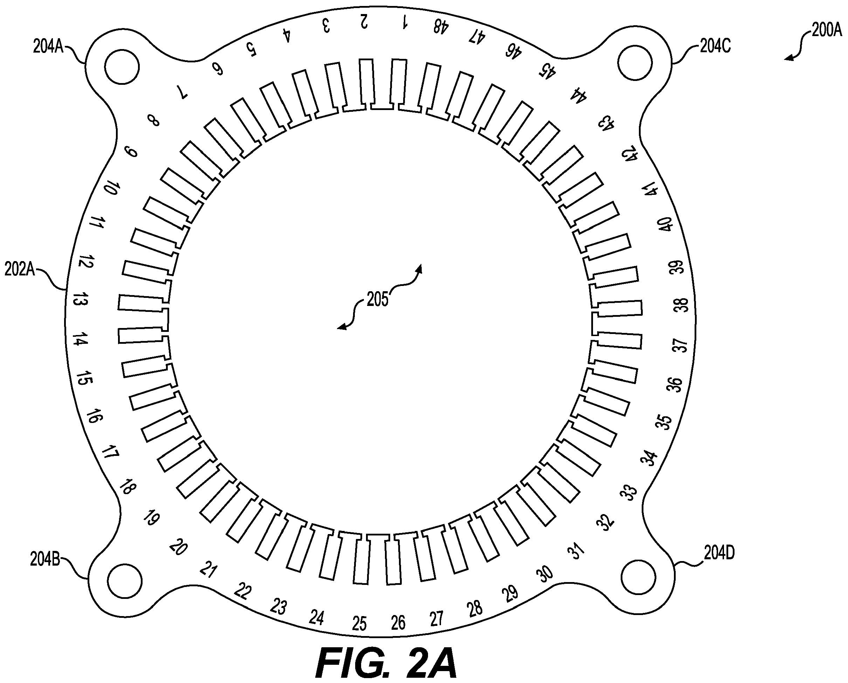

In certain embodiments, the vehicle 100 may include, for example, an electric vehicle (EV), a battery electric vehicle (BEV), a hybrid electric vehicle (HEV), a plug-in hybrid electric vehicle (PHEV), or other vehicle 100 that may be in part or wholly propelled by one or more electric motors (e.g., synchronous electric motors, permanent magnet synchronous electric motors (PMSMs), induction motors (IMs), line start synchronous motors (LSSMs), line start permanent magnet motors (LSPMMs), synchronous reluctance motors (SynRMs)) utilizing power stored to one or more batteries included in the vehicle 100. For example, as will be discussed in further detail with respect to FIGs. 2A, 2B, 3A-3F, and 4A-4C, the vehicle 100 may include one or more electric motors (e.g., synchronous electric motors, PMSMs, IMs, LSSMs, LSPMMs, SynRMs) including a stator stack with a number of stacked laminations including one or more defined coolant flow channels suitable for more effectively cooling the stator stack.

In some embodiments, the vehicle 100 may include an autonomous or semi-autonomous vehicle suitable for operating, for example, in accordance with Level-1 autonomous driving, Level-2 autonomous driving, Level-3 autonomous driving, Level-4 autonomous driving, Level-5 autonomous driving, or switching between the different levels of autonomous driving functionality. Further, while the present embodiments may be discussed primarily with respect to the example embodiment of a personal passenger vehicle 100, it should be appreciated that, in other embodiments, the vehicle 100 may be one of a fleet of similar vehicle 100 (e.g., a fleet of cargo vans, a fleet of police vehicles, a fleet of taxis, or a fleet of food-service vehicles).

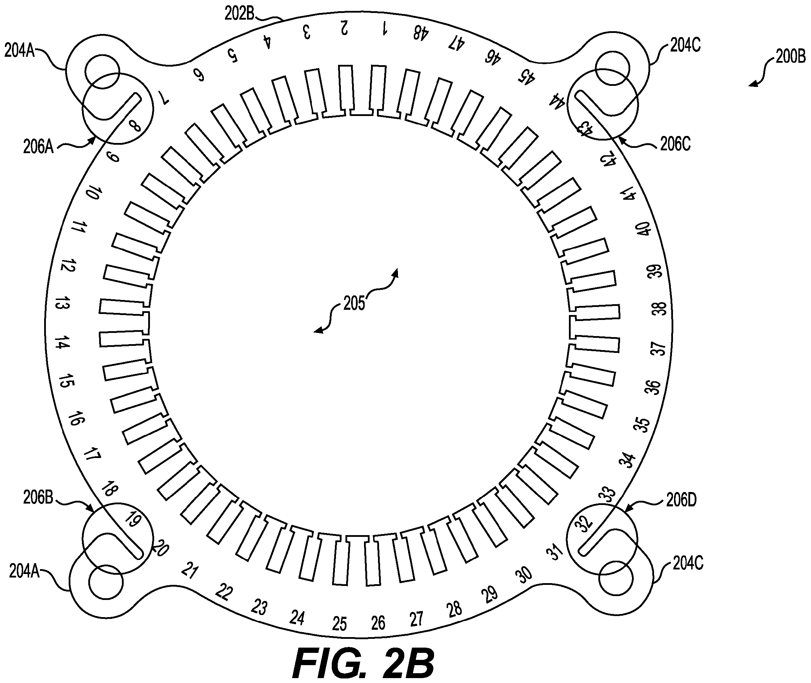

**FIGs. 2A** and **2B** illustrate an example diagram 200A of a lamination 202A including a number of mounting lobes 204A, 204B, 204C, and 204D and an example diagram 200B of a lamination 202B including the number of mounting lobes 204A, 204B, 204C, and 204D and a number of indentations 206A, 206B, 206C, and 206D extending into the number of projecting mounting lobes 204A, 204B, 204C, and 204D, respectively, in accordance with the presently disclosed embodiments. In certain embodiments, the lamination 202A including the number of mounting lobes 204A, 204B, 204C, and 204D may be one of a number of stacked laminations (e.g., electrically-conductive metal sheets, electrically-conductive steel sheets, electrically-conductive metal alloy sheets) forming a stator stack included as part of the electric motor drive unit of the vehicle 100. For example, as further depicted by FIG. 2A, the number of mounting lobes 204A, 204B, 204C, and 204D may each include a mounting lobe and mounting bolt hole that may be disposed along an outer perimeter of each lamination 202A, and may be further utilized to mount the stator stack as part of the electric motor drive unit of the vehicle 100.

As further depicted, in some embodiments, each lamination 202A may also include a number of stator slots 205 that may disposed along an inner perimeter of each lamination 202A, and further utilized to electrically couple the lamination 202A to one or more coil windings. In certain embodiments, due to the projecting configuration of the number of mounting lobes 204A, 204B, 204C, and 204D as disposed along the outer perimeter of each lamination 202A, 202B, the number of mounting lobes 204A, 204B, 204C, and 204D may without the presently-disclosed techniques-obstruct or at least partially restrict a desired flow of coolant (e.g., which may be dispersed to the stator stack by way of an oil-dispersing cooling technique) that may be dispersed to the stator stack. Thus, in accordance with the presently-disclosed embodiments, the lamination 202B including the number of mounting lobes 204A, 204B, 204C, and 204D and the number of indentations 206A, 206B, 206C, and 206D extending into the number of mounting lobes 204A, 204B, 204C, and 204D may be provided to collectively define one or more coolant flow channels for effectively cooling each lamination 202A, 202B of the stator stack.

For example, as depicted by FIG. 2B, in certain embodiments, the number of indentations may each include, for example, a partial slit or a partial breach that may be cut or lasered into the conductive metal of each lamination 202B in a manner such that the number of indentations 206A, 206B, 206C, and 206D (e.g., partial slits or partial breaches in the conductive metal sheet) may extend into each of one or more of the number of projecting mounting lobes 204A, 204B, 204C, and 204D. For example, in certain embodiments, indentations may extend into each of the number of projecting mounting lobes, whereas in other embodiments (not shown in FIG. 2B), indentations may extend into only some projecting mounting lobes (e.g., two adjacent projecting mounting lobes such as 204A and 204C).

In certain embodiments, the number of indentations 206A, 206B, 206C, and 206D (e.g., partial slits or partial breaches in the conductive metal sheet) may extend into each of one or more of the number of mounting lobes 204A, 204B, 204C, and 204D in a manner such that, once each lamination 202B is secured together (e.g., by stamping, stacking, indexing, bonding, and laminating each lamination 202B) to form the stator stack, the number of indentations 206A, 206B, 206C, and 206D (e.g., partial slits or partial breaches in the conductive metal sheet) may collectively define one or more coolant flow channels for effectively cooling each lamination 202B of the stator stack. In certain embodiments, the number of indentations 206A, 206B, 206C, and 206D in each of the laminations 202A, 202B may extend in opposite circumferential directions about an axis with respect to a number of stacked laminations 208B, for example. Further, it should be appreciated that in some embodiments-the number of indentations 206A, 206B, 206C, and 206D may not be disposed on each lamination of the stack. For example, in some embodiments, the stator stack may include alternations (e.g., every 1 lamination, every 2 laminations, every 3 laminations, every 4 laminations, and so on and so forth) between laminations 202A (e.g., without the number of indentations 206A, 206B, 206C, and 206D) and laminations 202B (e.g., with the number of indentations 206A, 206B, 206C, and 206D) as part of the stator stack. Additionally, in some embodiments, the number of indentations 206A, 206B, 206C, and 206D may not be included in each of the number of mounting lobes 204A, 204B, 204C, and 204D. For example, in one embodiment, the mounting lobes 204A and 204C may include respective indentations 206A and 206C, while the mounting lobes 204B and 204D may not include any indentations.

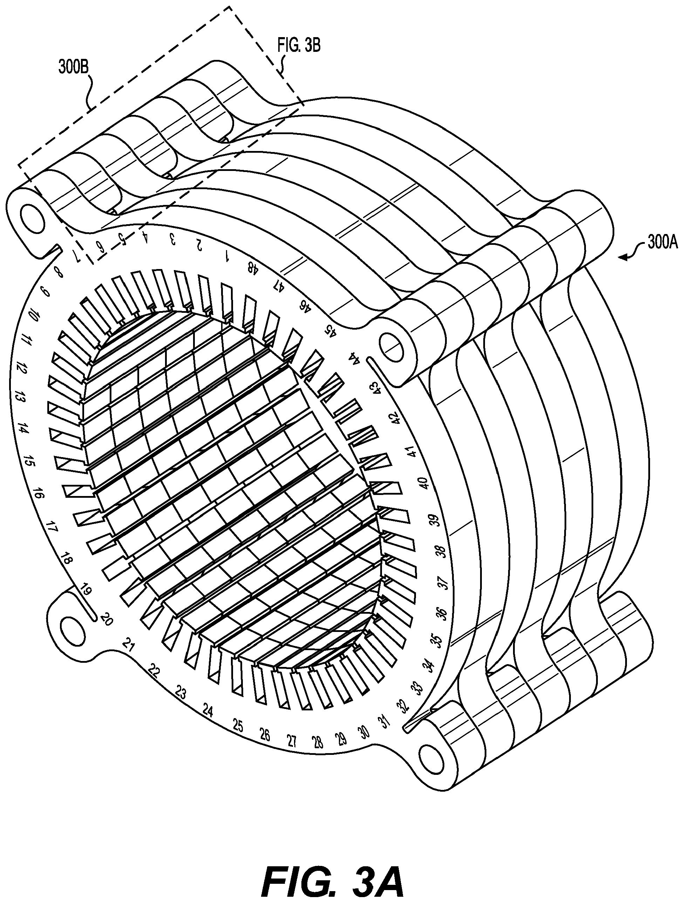

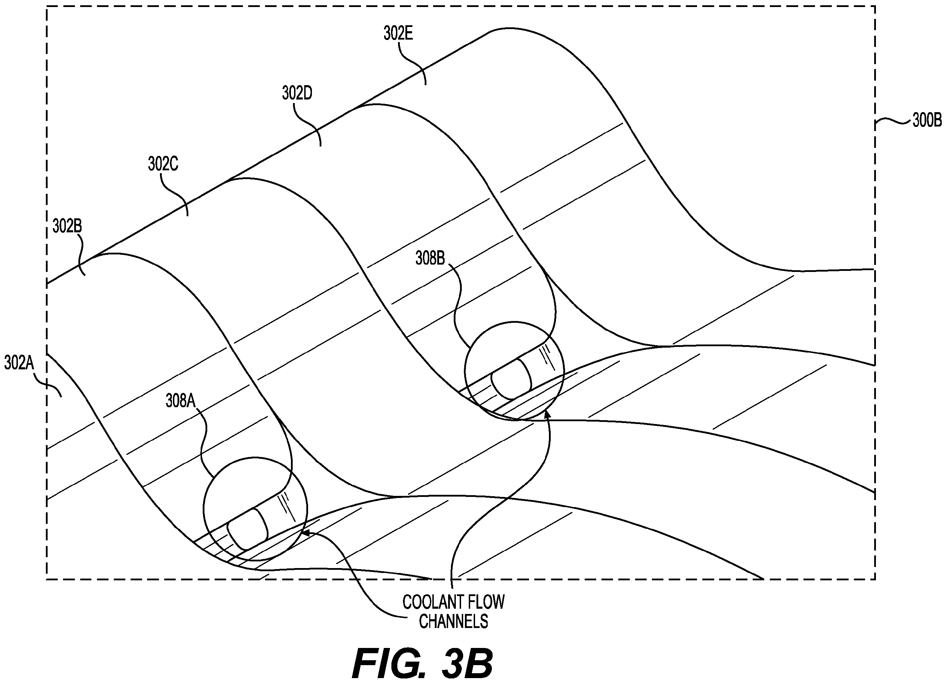

**FIGs. 3A-3F** illustrate example embodiments of a stator stack 300A, 300B, 300C, 300D, 300E, and 300F with a number of stacked laminations including projecting mounting lobes and a number of indentations for defining one or more coolant flow channels, in accordance with the presently disclosed embodiments. In certain embodiments, the stator stack 300A, 300B, 300C, 300D, 300E, and 300F may include, for example, one or more of a full-face, self-bonded stator stack, an interlocked stator stack, a welded stator stack, or a dot-bonded stator stack. As depicted, FIG. 3A illustrates a perspective view of a stator stack 300A including one or more defined coolant flow channels 300B, which are illustrated in a detailed view in FIG. 3B. Indeed, as depicted by FIG. 3B, the stator stack 300B may include a number of stacked laminations 302A, 302B, 302C, 302D, and 302E and one or more defined coolant flow channels 308A and 308B. In certain embodiments where the number of indentations do not extend into every projecting mounting lobe, the one or more defined coolant flow channels (e.g., similar to 308A and 308B shown) may only be defined so as to pass through one or more set of aligned projecting mounting lobes.

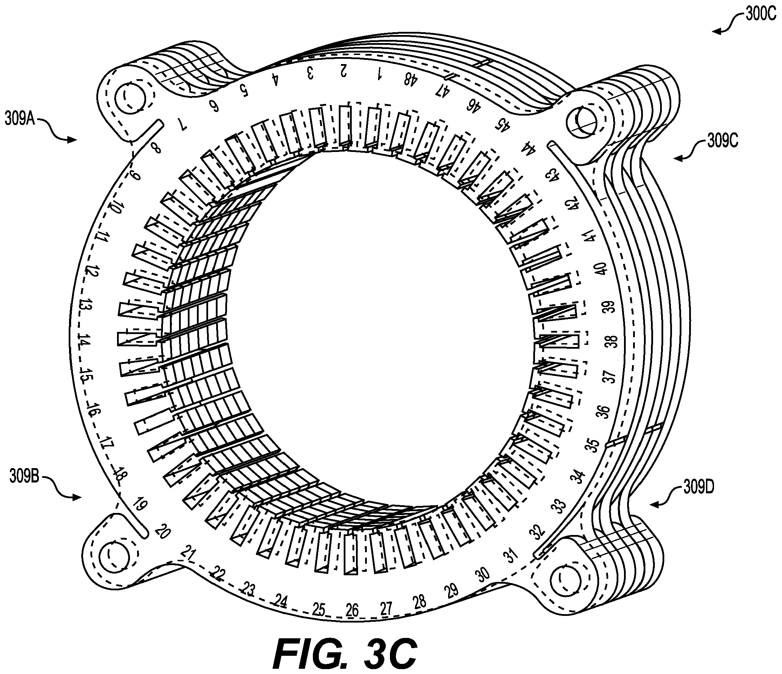

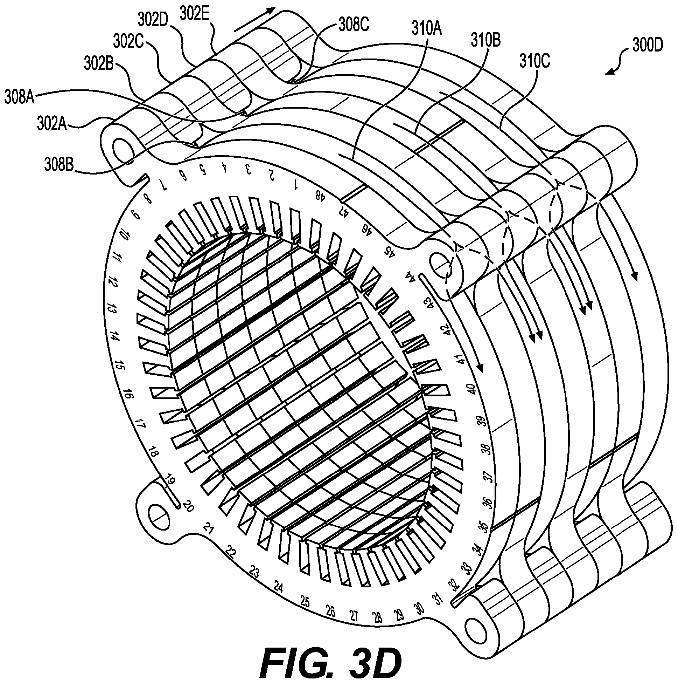

In certain embodiments, as depicted by an example lamination (e.g., illustrated by the dashed lines) in FIG. 3C, the number of stacked laminations 302A, 302B, 302C, 302D, and 302E may be rotated or otherwise arranged with respect to each other within the stator stack (e.g., stator stack 300A, 300B, 300C, 300D, 300E, and 300F) so as to cause the number of indentations 309A, 309B, 309C, and 309D (e.g., partial slits or partial breaches in the conductive metal sheet) to define one or more coolant flow channels 308A, 308B, and 308C as depicted by FIG. 3D. As depicted by FIG. 3D, the number of stacked laminations 302A, 302B, 302C, 302D, and 302E are rotated approximately 90° about the stator axis with respect to one another. In certain embodiments, laminations may be arranged rotated normal to the stator axis (i.e., mirrored) with respect to one another or rotate about the stator axis at some other angle to define the one or more coolant flow channels.

For example, as further depicted by FIG. 3D, by defining the one or more coolant flow channels 308A, 308B, and 308C, an oil-dispersing coolant dispersed to the stator stack (e.g., stator stack 300A, 300B, 300C, 300D, 300E, and 300F) may be allowed to pervade each of the number of mounting lobes 204A, 204B, 204C, and 204D of each of the number of stacked laminations 302A, 302B, 302C, 302D, and 302E and flow along the circumference of the stator stack (e.g., stator stack 300A, 300B, 300C, 300D, 300E, and 300F) as illustrated by oil-dispersing coolant flow paths 310A, 310B, and 310C. Such a configuration may ensure that an oil-dispersing coolant dispersed to the stator stack (e.g., stator stack 300A, 300B, 300C, 300D, 300E, and 300F) may more effectively cool the stator stack.

Indeed, while the present embodiments may be discussed herein primarily with respect to utilizing an oil-dispersing cooling technique (e.g., an oil-spray cooling technique, an oil-jet cooling technique, or an oil-dripping cooling technique) to limit thermal impact to the stator stack (e.g., stator stack 300A, 300B, 300C, 300D, 300E, and 300F), it should be appreciated that any of various cooling techniques may be utilized to limit thermal impact to the stator stack (e.g., stator stack 300A, 300B, 300C, 300D, 300E, and 300F) including, for example, an open ventilated cooling technique, a housing water-jacket cooling technique, a direct-stator cooling technique, a flooded-stator cooling technique, and so forth.

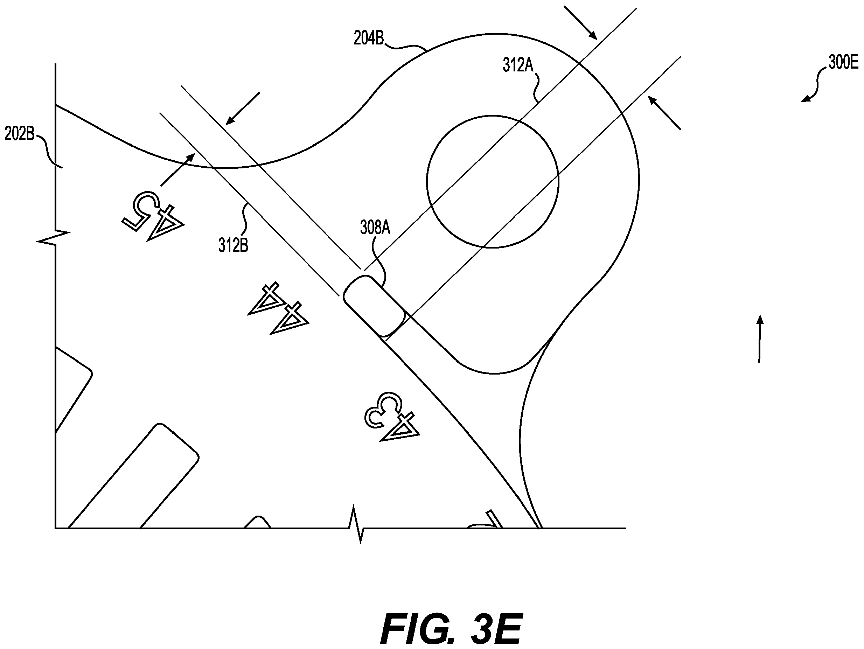

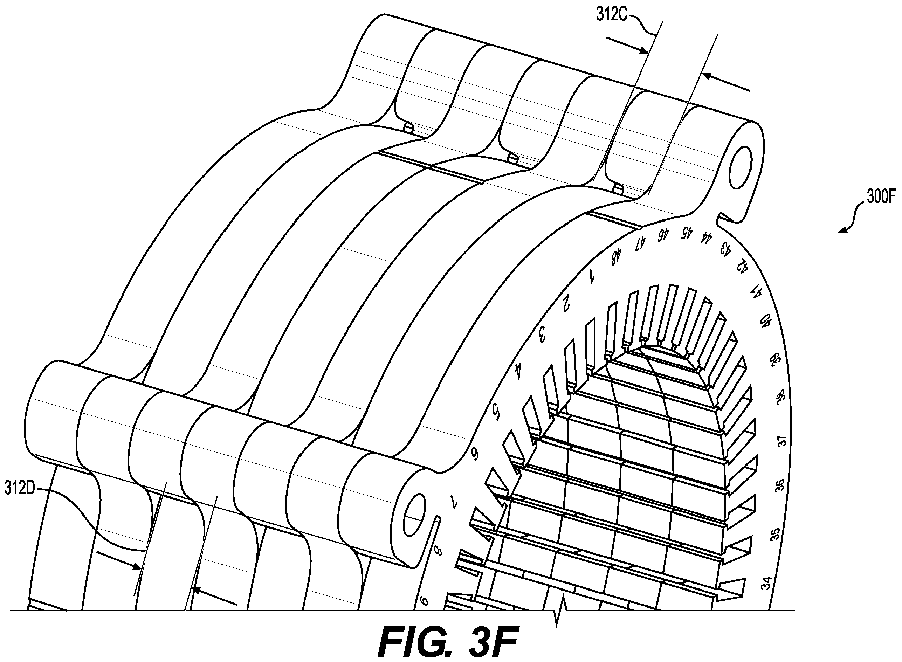

In some embodiments, as further depicted by FIGs. 3E and 3F, the dimensions 312A, 312B, and 312C of the one or more coolant flow channels 308A, 308B, and 308C may be defined and sized based on, for example, a desired coolant flow rate. For example, in some embodiments, the dimensions 312A, 312B, and 312C of the one or more coolant flow channels 308A, 308B, and 308C may be increased or decreased by one or more units (e.g., a few centimeters or a few millimeters) to increase or decrease the flow rate of the oil-dispersing coolant dispersed to the stator stack (e.g., stator stack 300A, 300B, 300C, 300D, 300E, and 300F). In other embodiments, the dimensions 312A, 312B, and 312C of the one or more coolant flow channels 308A, 308B, and 308C may be defined and sized based on, for example, one or more inherent thermal constraints or user-determined thermal constraints associated with the stator stack (e.g., stator stack 300A, 300B, 300C, 300D, 300E, and 300F).

For example, in some embodiments, the dimensions 312A, 312B, and 312C of the one or more coolant flow channels 308A, 308B, and 308C may be increased or decreased by one or more units (e.g., a few centimeters or a few millimeters) to increase or decrease the flow rate of the oil-dispersing coolant dispersed to the stator stack (e.g., stator stack 300A, 300B, 300C, 300D, 300E, and 300F) to control the operating temperature of the stator stack (e.g., stator stack 300A, 300B, 300C, 300D, 300E, and 300F) to be within a certain range. In some embodiments, each of the number of stacked laminations 302A, 302B, 302C, 302D, and 302E may be stacked about an axis in an axial direction with respect the stator stack (e.g., stator stack 300A, 300B, 300C, 300D, 300E, and 300F), in which each of the number of mounting lobes 204A, 204B, 204C, and 204D, for example, may extend radially outward from the axis. In certain embodiments, mounting holes may further pass through the number of mounting lobes 204A, 204B, 204C, and 204D in the axial direction. In one embodiment, the number of indentations 309A, 309B, 309C, and 309D may extend at least partially beyond a center of each of the number of mounting lobes 204A, 204B, 204C, and 204D. In some embodiments, each of the number of indentations 309A, 309B, 309C, and 309D (e.g., partial slits or partial breaches in the conductive metal sheet) may be normal to the axial direction. In some embodiments, the number of indentations 309A, 309B, 309C, and 309D in each of the number of stacked laminations 302A, 302B, 302C, 302D, and 302E may extend in opposite circumferential directions about the axis.

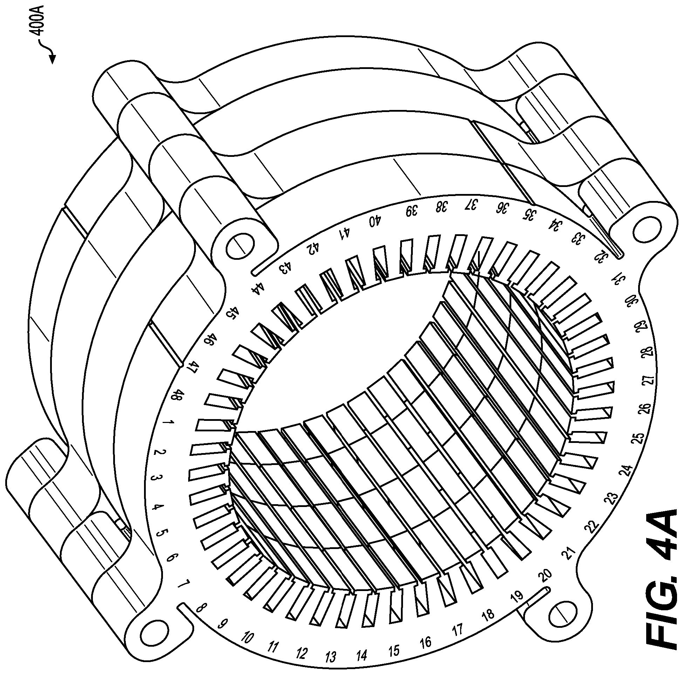

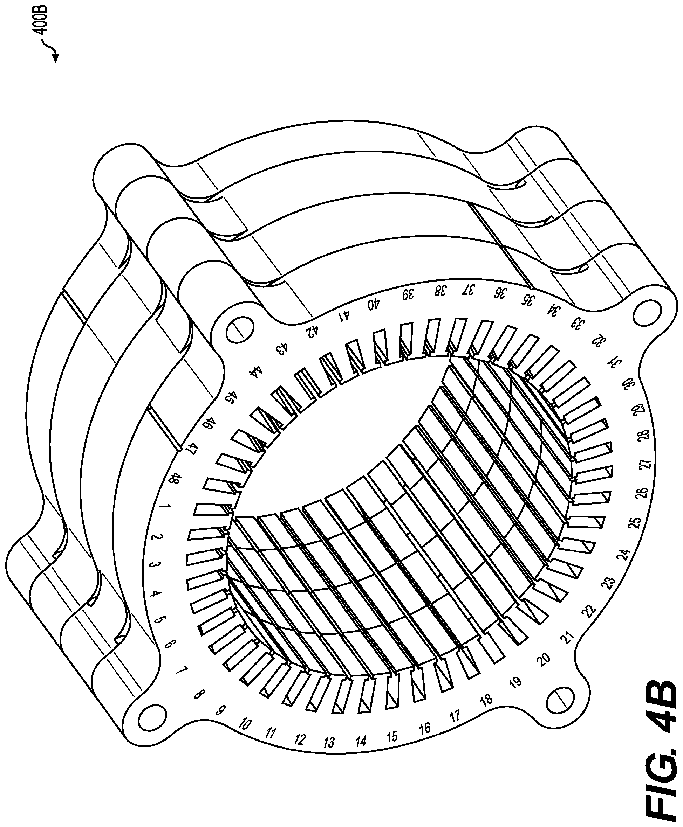

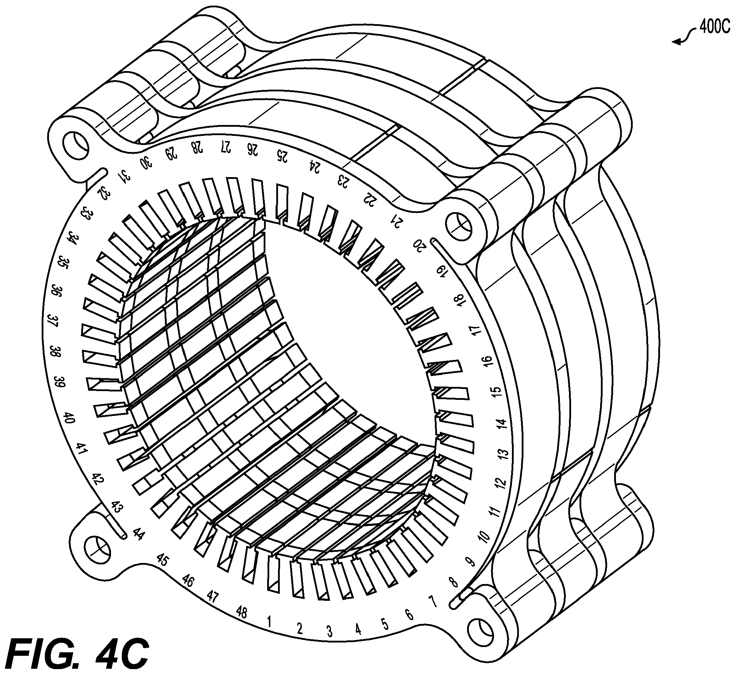

**FIGs. 4A-4C** illustrate example embodiments of alternative configurations of a stator stack 400A, 400B, and 400C with a number of stacked laminations including projecting mounting lobes and a number of indentations for defining one or more coolant flow channels, in accordance with the presently disclosed embodiments. For example, in certain embodiments, the stator stack 400A may include, for example, a stator stack of an alternating number of stacked laminations including projecting mounting lobes and one or more defined coolant flow channels (e.g., every other lamination includes one or more defined coolant flow channels) and/or an even number of laminations (e.g., 2 laminations, 4 laminations, 6 laminations, 8 laminations).

Similarly, in certain embodiments, the stator stack 400B may include, for example, differing types of laminations that may be included in the stator stack 400B. For example, in one embodiment, the stator stack 400B may include, for example, a stator stack that includes some combination of laminations that may not include one or more defined coolant flow channels and laminations that may include one or more defined coolant flow channels as described herein. Likewise, the stator stack 400C may include, for example, a stator stack of an uneven number of stacked laminations including projecting mounting lobes and one or more defined coolant flow channels (e.g., 3 laminations, 5 laminations, 5 laminations, 7 laminations) as described herein.

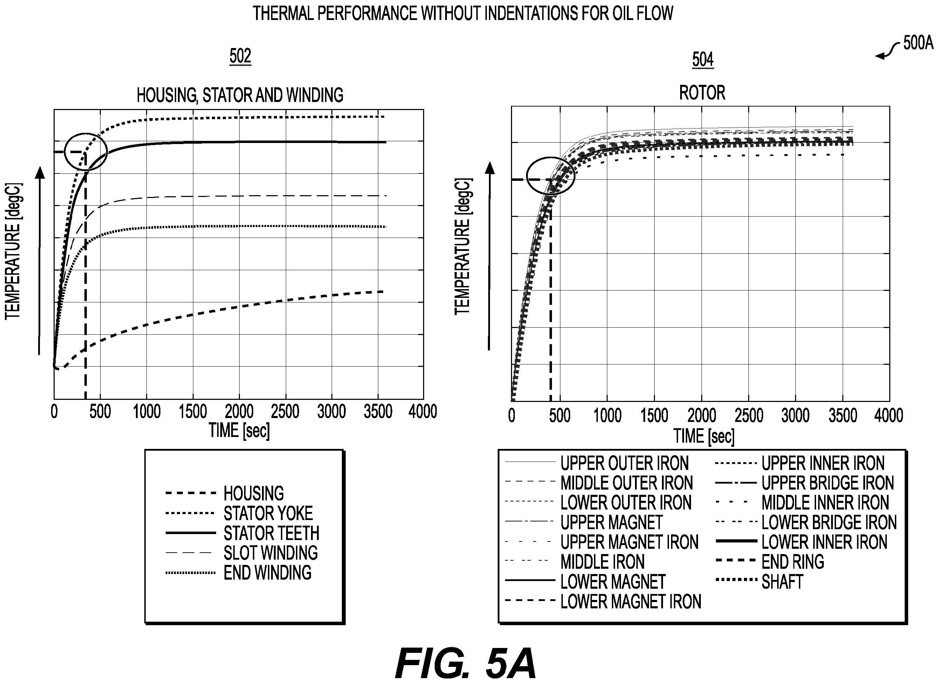

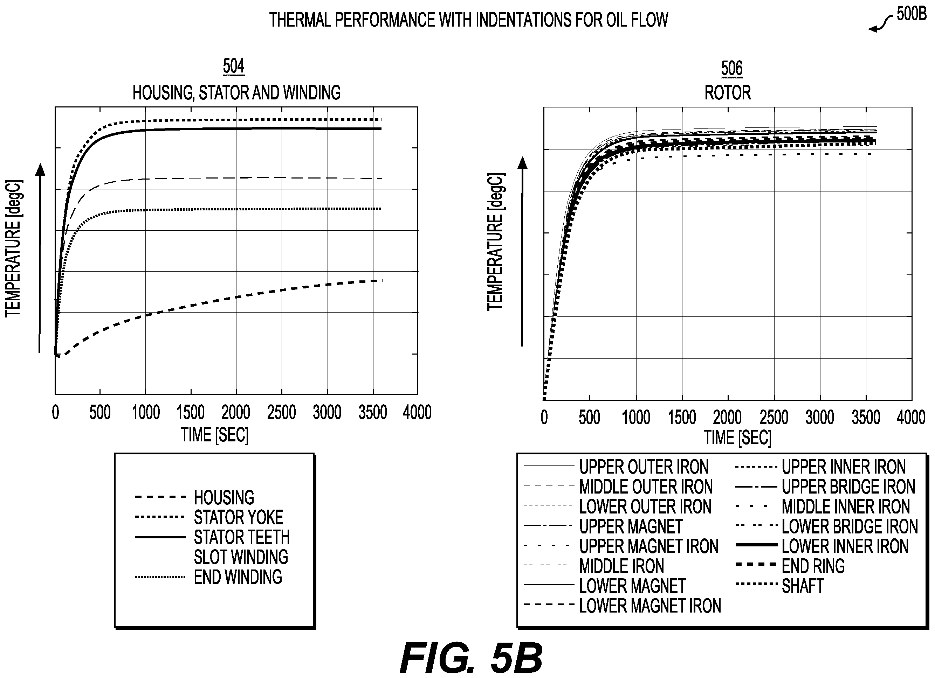

**FIGs. 5A** and **5B** illustrate example plot diagram 500A of the thermal impact to an electric motor drive unit (e.g., housing, stator, stator windings, and rotor) for a stator stack with a number of stacked laminations without a number of indentations for defining one or more coolant flow channels as compared to example plot diagram 500B of the thermal impact to an electric motor drive unit (e.g., housing, stator, stator windings, and rotor) for a stator stack with a number of stacked laminations including a number of indentations for defining one or more coolant flow channels, in accordance with the presently disclosed embodiments. As depicted by plot 502 of FIG. 5A, for the housing, stator, and stator windings, the maximum operating temperature (e.g., corresponding to the stator) and the maximum operating temperature (e.g., corresponding to the rotor) may be markedly greater than the maximum operating temperature (e.g., corresponding to the stator) and the maximum operating temperature (e.g., corresponding to the rotor) as depicted by plot 506 of FIG. 5B.

Thus, in accordance with the presently-disclosed embodiments, by providing a stator stack with a number of stacked laminations each including a number of indentations for defining one or more coolant flow channels for more effectively cooling the stator stack, the overall maximum operating temperature of an electric motor drive unit (e.g., housing, stator, stator windings, and rotor) may decreased by a number of degrees Celsius (°C). Indeed, limiting the thermal impact to the stator stack and other components of the electric motor drive unit may further increase the reliability and the operational lifespan of the electric motor drive unit (e.g., by preventing potential thermal damage, such as permanent magnet derating or stator winding enamel electrical strength reduction).

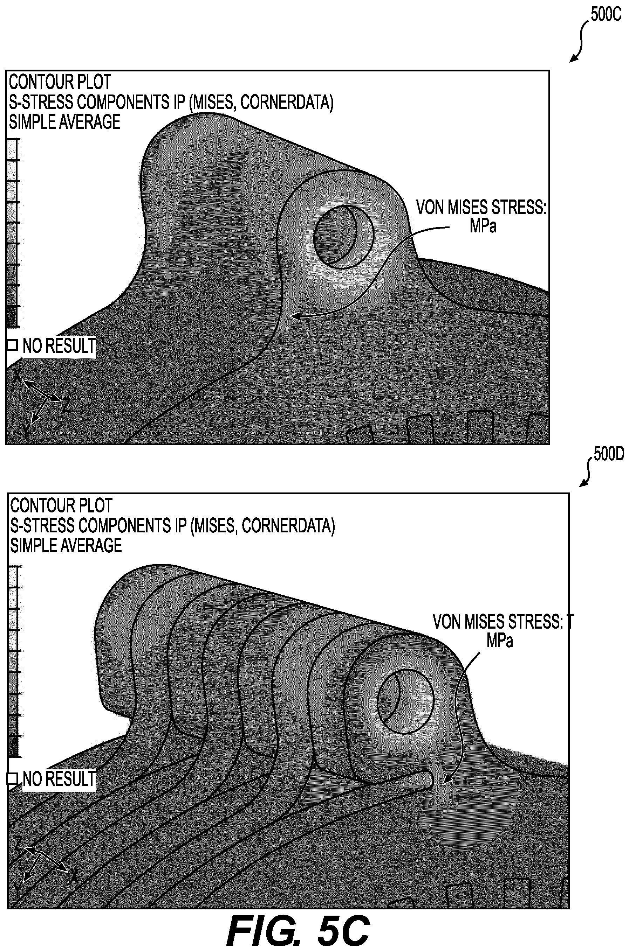

**FIG. 5C** illustrates an example diagram 500C of the stress impact to a stator stack with a number of stacked laminations without a number of indentations for defining one or more coolant flow channels as compared to an example diagram 500D of the stress impact to a stator stack with a number of stacked laminations including a number of indentations for defining one or more coolant flow channels, in accordance with the presently disclosed embodiments. As depicted by example diagrams 500C and 500D of FIG. 5C, providing the stator stack with a number of stacked laminations each including a number of indentations for defining one or more coolant flow channels has only a negligible impact to the overall stress of the stator stack and the overall stress of the stator stack remains within the acceptable range for optimal operation.

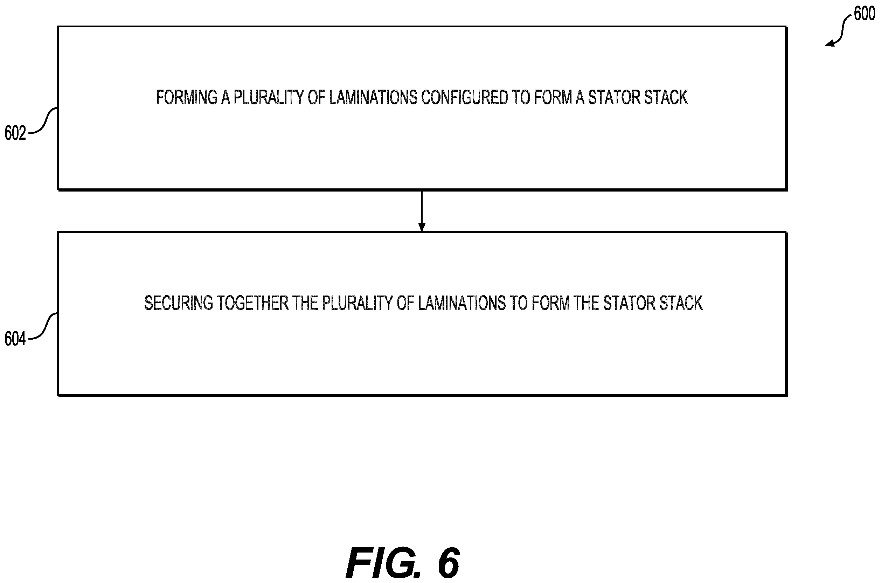

**FIG. 6** illustrates a flow diagram of a method 600 for manufacturing a stator stack with a number of stacked laminations including projecting mounting lobes and a number of indentations for defining one or more coolant flow channels, in accordance with the presently disclosed embodiments. The method 600 may begin at block 602 with forming a plurality of laminations configured to form a stator stack. For example, in certain embodiments, each of the plurality of laminations may include a set of projections disposed along an outer perimeter of the lamination, in which one or more of each of the set of projections includes a mounting hole passing therethrough. Each of the plurality of laminations may further include a plurality of indentations each extending into a respective one of the set of projections. In some embodiments, forming the set of projections along the outer perimeter of each of the plurality of laminations may be performed prior to forming the plurality of indentations in the plurality of laminations. The method 600 may then conclude at block 604 with securing together the plurality of laminations to form the stator stack. For example, in certain embodiments, the plurality of laminations may be secured together in accordance with a predetermined indexing, such that the plurality of indentations may define one or more coolant flow channels.

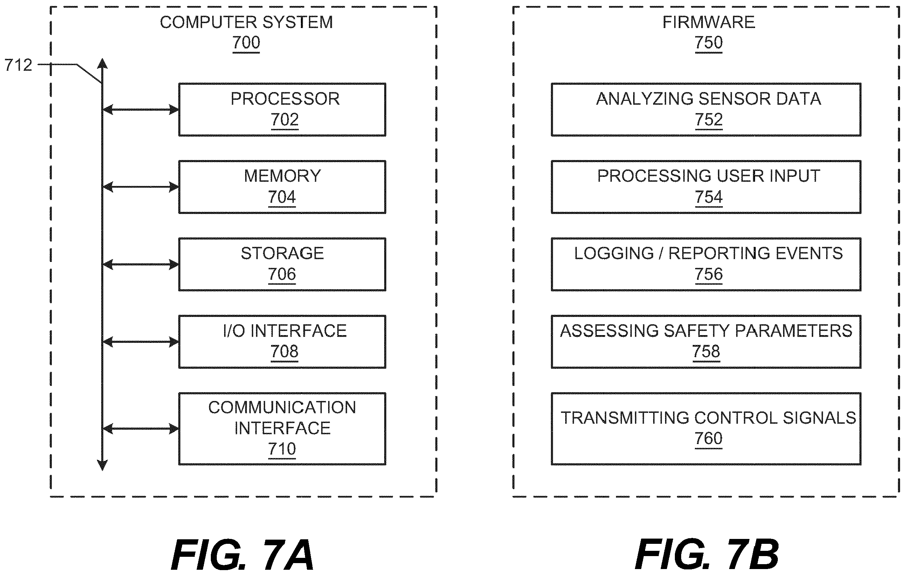

**FIG. 7A** illustrates an example computer system 700. Computer system 700 may include a processor 702, memory 704, storage 706, an input/output (I/O) interface 708, a communication interface 710, and a bus 712. Although this disclosure describes one example computer system including specified components in a particular arrangement, this disclosure contemplates any suitable computer system with any suitable number of any suitable components in any suitable arrangement. As an example and not by way of limitation, computer system 700 may be an electronic control unit (ECU), an embedded computer system, a system-on-chip, a single-board computer system, a desktop computer system, a laptop or notebook computer system, a mainframe, a mesh of computer systems, a mobile telephone, a personal digital assistant, a server computing system, a tablet computer system, or a combination of two or more of these. Where appropriate, computer system 700 may include one or more computer systems 700; be unitary or distributed, span multiple locations, machines, or data centers; or reside in a cloud, which may include one or more cloud components in one or more networks. Where appropriate, computer system(s) 700 may perform, at different times or at different locations, in real time or in batch mode, one or more steps of one or more methods described or illustrated herein.

Processor 702 (e.g., compute units) may include hardware for executing instructions, such as those making up a computer program. As an example and not by way of limitation, to execute instructions, processor 702 may retrieve (or fetch) the instructions from an internal register, an internal cache, memory 704, or storage 706; decode and execute them; and then write one or more results to an internal register, an internal cache, memory 704, or storage 706 (e.g., storage units). Processor 702 may include one or more internal caches for data, instructions, or addresses.

In certain embodiments, memory 704 includes main memory for storing instructions for processor 702 to execute or data for processor 702 to operate on. In certain embodiments, one or more memory management units (MMUs) reside between processor 702 and memory 704 and facilitate accesses to memory 704 requested by processor 702. In certain embodiments, memory 704 includes random access memory (RAM). This disclosure contemplates any suitable RAM.

In certain embodiments, storage 706 includes mass storage for data or instructions. As an example and not by way of limitation, storage 706 may include a removable disk drive, flash memory, an optical disc, a magneto-optical disc, magnetic tape, or a Universal Serial Bus (USB) drive or two or more of these. Storage 706 may include removable or fixed media and may be internal or external to computer system 700. Storage 706 may include any suitable form of non-volatile, solid-state memory or read-only memory (ROM).

In certain embodiments, I/O interface 708 includes hardware, software, or both, providing one or more interfaces for communication between computer system 700 and one or more input and/or output (I/O) devices. Computer system 700 may be communicably connected to one or more of these I/O devices, which may be incorporated into, plugged into, paired with, or otherwise communicably connected to vehicle 100 (e.g., through the TCM ECU). An input device may include any suitable device for converting volitional user input into digital signals that can be processed by computer system 700, such as, by way of example and not limitation, a steering wheel, a touch screen, a microphone, a joystick, a scroll wheel, a button, a toggle, a switch, a dial, or a pedal. An input device may include one or more sensors for capturing different types of information, such as, by way of example and not limitation, sensors 710 described above. An output device may include devices designed to receive digital signals from computer system 700 and convert them to an output format, such as, by way of example and not limitation, speakers, headphones, a display screen, a heads-up display, a lamp, a smart vehicle accessory, another suitable output device, or a combination thereof. This disclosure contemplates any suitable I/O devices and any suitable I/O interfaces 708 for them. I/O interface 708 may include one or more I/O interfaces 708, where appropriate.

In certain embodiments, communication interface 710 includes hardware, software, or both providing one or more interfaces for data communication between computer system 700 and one or more other computer systems 700 or one or more networks. Communication interface 710 may include one or more interfaces to a controller area network (CAN) or to a local interconnect network (LIN). Communication interface 710 may include one or more of a serial peripheral interface (SPI) or an isolated serial peripheral interface (isoSPI). In some embodiments, communication interface 710 may include a network interface controller (NIC) or network adapter for communicating with an Ethernet or other wire-based network or a wireless NIC (WNIC) or wireless adapter for communicating with a wireless network, such as a WI-FI network or a cellular network.

In certain embodiments, bus 712 includes hardware, software, or both coupling components of computer system 700 to each other. Bus 712 may include any suitable bus, as well as one or more buses 712, where appropriate. Although this disclosure describes a particular bus, any suitable bus or interconnect is contemplated.

Herein, a computer-readable non-transitory storage medium or media may include one or more semiconductor-based or other integrated circuits (ICs) (such, as for example, field-programmable gate arrays or application-specific ICs), hard disk drives, hybrid hard drives, optical discs, optical disc drives, magneto-optical discs, magneto-optical drives, solid-state drives, RAM drives, any other suitable computer-readable non-transitory storage media, or any suitable combination. A computer-readable non-transitory storage medium may be volatile, non-volatile, or a combination of volatile and non-volatile, where appropriate.

**FIG. 7B** illustrates example firmware 750 for a vehicle ECU 700 as described with respect to control system 730. Firmware 750 may include functions 752 for analyzing sensor data based on signals received from sensors or cameras received through communication interface 710. Firmware 750 may include functions 754 for processing user input (e.g., directly provided by a driver of or passenger in vehicle 100, or provided through a computing device) received through I/O interface 708. Firmware 750 may include functions 756 for logging detected events (which may be stored in storage 706 or uploaded to the cloud), as well as functions for reporting detected events (e.g., to a driver or passenger of the vehicle through an instrument display or interactive interface of the vehicle, or to a vehicle manufacturer, service provider, or third party through communication interface 710). Firmware 750 may include functions 758 for assessing safety parameters (e.g., monitoring the temperature of a vehicle battery or the distance between vehicle 100 and nearby vehicles). Firmware 750 may include functions 760 for transmitting control signals to components of vehicle 700, including other vehicle ECUs 700.

Herein, "or" is inclusive and not exclusive, unless expressly indicated otherwise or indicated otherwise by context. Therefore, herein, "A or B" means "A, B, or both," unless expressly indicated otherwise or indicated otherwise by context. Moreover, "and" is both joint and several, unless expressly indicated otherwise or indicated otherwise by context. Therefore, herein, "A and B" means "A and B, jointly or severally," unless expressly indicated otherwise or indicated otherwise by context.

The scope of this disclosure encompasses all changes, substitutions, variations, alterations, and modifications to the example embodiments described or illustrated herein that a person having ordinary skill in the art would comprehend. The scope of this disclosure is not limited to the example embodiments described or illustrated herein. Moreover, although this disclosure describes and illustrates respective embodiments herein as including particular components, elements, feature, functions, operations, or steps, any of these embodiments may include any combination or permutation of any of the components, elements, features, functions, operations, or steps described or illustrated anywhere herein that a person having ordinary skill in the art would comprehend. Furthermore, reference in the appended claims to an apparatus or system or a component of an apparatus or system being adapted to, arranged to, capable of, configured to, enabled to, operable to, or operative to perform a particular function encompasses that apparatus, system, component, whether or not it or that particular function is activated, turned on, or unlocked, as long as that apparatus, system, or component is so adapted, arranged, capable, configured, enabled, operable, or operative. Additionally, although this disclosure describes or illustrates certain embodiments as providing particular advantages, certain embodiments may provide none, some, or all of these advantages.

## Claims

1. A stator assembly, comprising:
a plurality of laminations configured to form a stator stack, wherein each of the plurality of laminations comprises:
a set of projections disposed along an outer perimeter of the lamination, each of the set of projections including a mounting hole passing therethrough; and
a plurality of indentations each extending into a respective one of the set of projections;
wherein the plurality of laminations are configured to form the stator stack in accordance with a predetermined indexing, such that the plurality of indentations define one or more coolant flow channels.

2. The stator assembly of Claim 1, wherein the plurality of laminations is configured to receive a flow of coolant by way of the one or more coolant flow channels.

3. The stator assembly of Claim 1, wherein the predetermined indexing comprises a predetermined indexing of approximately 90°.

4. The stator assembly of Claim 3, wherein the plurality of laminations comprises a first lamination and a second lamination, and wherein the first lamination is rotated by approximately 90° with respect to the second lamination.

5. The stator assembly of Claim 4, wherein the first lamination is adjacent to the second lamination.

6. The stator assembly of Claim 1, wherein the one or more coolant flow channels are defined in accordance with a desired coolant flow rate.

7. The stator assembly of Claim 1, wherein the one or more coolant flow channels are defined in accordance with one or more thermal constraints of the stator stack.

8. The stator assembly of Claim 1, wherein each of the one or more coolant flow channels is configured to direct a flow of an oil-dispersing coolant to at least one the plurality of laminations.

9. The stator assembly of Claim 1, wherein each of the plurality of laminations are stacked about an axis in an axial direction, wherein each set of the set of projections extend radially outward from the axis, wherein each of the mounting holes pass through the set of projections in the axial direction, and wherein each of the plurality of indentations are normal to the axial direction.

10. The stator assembly of Claim 9, wherein the plurality of indentations in each of the plurality of laminations extend in opposite circumferential directions about the axis.

11. The stator assembly of Claim 9, wherein the plurality of indentations extend at least partially beyond a center of the respective one of the set of projections.

12. The stator assembly of Claim 1, wherein the stator stack comprises a full-face, self-bonded stator stack, an interlocked stator stack, a welded stator stack, or a dot-bonded stator stack.

13. The stator assembly of Claim 1, further comprising a housing, wherein each of the set of projections disposed along the outer perimeter of the lamination is configured to receive a bolt into the mounting hole for mounting to the housing.

14. A lamination layer of a stator stack, comprising:
a ring portion;
a set of slots disposed along an inner perimeter of the ring portion;
a set of projections disposed along an outer perimeter of the ring portion, each of the set of projections including a mounting hole passing therethrough, wherein the set of projections is configured to extend outwardly in a direction opposite the set of slots; and
a plurality of indentations each extending into a respective one of the set of projections.

15. The lamination layer of Claim 14, wherein the lamination layer comprises one of a plurality of lamination layers configured to form the stator stack in accordance with a predetermined indexing, such that the plurality of indentations define one or more coolant flow channels.

16. The lamination layer of Claim 14, wherein the predetermined indexing comprises a predetermined indexing of approximately 90°.

17. A method of manufacturing a stator assembly, comprising:
forming a plurality of laminations configured to form a stator stack, wherein each of the plurality of laminations comprises:
a set of projections disposed along an outer perimeter of the lamination, each of the set of projections including a mounting hole passing therethrough; and
a plurality of indentations each extending into a respective one of the set of projections; and
securing together the plurality of laminations to form the stator stack, wherein the plurality of laminations are secured together in accordance with a predetermined indexing, such that the plurality of indentations define one or more coolant flow channels.

18. The method of Claim 17, wherein forming the plurality of laminations comprises:
forming the plurality of laminations without the plurality of indentations; and
subsequent to forming the plurality of laminations without the plurality of indentations, forming the plurality of indentations in the plurality of laminations.

19. The method of Claim 18, further comprising:
prior to forming the plurality of indentations in the plurality of laminations, forming the set of projections along an outer perimeter of each of the plurality of laminations.

20. The method of Claim 17, wherein securing together the plurality of laminations comprises bonding together the plurality of laminations to form the stator stack.
